# EUROPÄISCHE PATENTSCHRIFT

(11) **EP 1 672 380 B1**
(45) Veröffentlichungstag und Bekanntmachung des Hinweises auf die Patenterteilung: **14.10.2015**
(21) Anmeldenummer: 04030189.7
(22) Anmeldetag: 20.12.2004
(51) Int. Cl.: G06K 19/07, G01S 7/35, G01S 13/34, G01S 13/75, H01Q 9/04

(54) **HMI System mit integralem Sende- und Empfängerkonzept**
HMI-System with integrated transmit and receive concept
Système à interface homme-machine avec un concept d'émission et de réception integré

(43) Veröffentlichungstag der Anmeldung: 21.06.2006
(73) Patentinhaber: Siemens Aktiengesellschaft, 80333 München (DE)
(72) Erfinder: Gila, Janos, Dr., 2340 Mödling (AT); Konrad, Wolfgang, Dr., 2340 Mödling (AT)

(56) Entgegenhaltungen:
- DE-A1- 10 234 467
- DE-A1- 10 310 158
- DE-T2- 69 106 732
- GB-A- 2 372 902
- US-A- 4 737 793
- US-A- 6 167 464
- STELZER ET AL: "readout unit for wireless saw sensors and id-tags" SECOND INTERNATIONAL SYMPOSIUM ON ACOUSTIC WAVE DEVICES FOR FUTURE MOBILE COMMUNICATION SYSTEMS, 3. März 2004 (2004-03-03), XP001206909 KEYAKI HALL, CHIBA UNIVERSITY, JAPAN
- REYNOLDS L ET AL: "Single chip FMCW radar for target velocity and range sensing applications", GALLIUM ARSENIDE INTEGRATED CIRCUIT (GAAS IC) SYMPOSIUM, 1989, TECHNICAL DIGEST 1989, 22 October 1989 (1989-10-22), - 25 January 1989 (1989-01-25), pages 243-246, XP010085954, San Diego, CA, USA DOI: 10.1109/GAAS.1989.69334

## Beschreibung

Die Erfindung betrifft ein HMI System mit zumindest einem mobilen Bedien- und Beobachtungsgerät für die Automatisierungskomponenten einer technischen Anlage mit einem integralen Sende- und Empfängerkonzept.

Technische Anlagen sind alle Arten von technischen Geräten und Systemen sowohl in Einzelanordnung als auch in datentechnischer Vernetzung z.B. über einen Feldbus. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstraße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet. Zur Entlastung dieser Steuerungen weisen Automatisierungen weitere spezielle Geräte auf, welche eine Schnittstelle für Bedienpersonal bilden. Diese werden als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Vielfach sind die HMI Geräte z.B. in Form von Terminals als stationäre Komponenten in ein Automatisierungssystem fest integriert. Derartige Terminals sind dann in der Regel fest über Kabelverbindungen mit dem Automatisierungssystem verbunden. Sind diese Terminals als Hand-Held Geräte ausgeführt, so ist deren Aktionsradius durch ein Anschlusskabel beschränkt. Hierdurch ist es in vielen Fällen gewährleistet, dass eine Bedienperson sicherheitsrelevante Bedienungen nur in unmittelbarer Nähe der technischen Anlage oder zumindest unter Einhaltung eines ausreichenden Sichtkontaktes vornehmen kann.

Anders ist dagegen die Situation, wenn ein HMI Gerät in Form eines mobilen Operators Panels ausgeführt ist. Ein solches mobiles Bedien- und Beobachtungsgerät kann z.B. über eine Funkstrecke mit dem Automatisierungssystem verbunden sein, die eine große Reichweite aufweist. So ist es in einem solchen Fall nicht ausgeschlossen, dass sich eine Bedienperson, die ein mobiles Bedien- und Beobachtungsgerät benutzt, sich so weit von einer dazugehörigen technischen Anlage entfernt, dass sicherheitsrelevante Bedienungen aus einer an sich unzulässigen Entfernung vorgenommen werden. In einem solchen Fall wäre dann die Personensicherheit nicht gewährleistet.

Zur Vermeidung einer Steuerung des Automatisierungssystems durch das mobile Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Hierzu kann das HMI System mit Auswertemitteln zur Verwaltung eines aktiven Bedienbereichs um die technische Anlage herum ausgestaltet werden. Die Lokalisierungsmittel werten den Abstand des mobilen Bedien- und Beobachtungsgeräts von der technischen Anlage aus, um detektieren zu können, ob sich das mobile Bedien- und Beobachtungsgerät innerhalb des aktiven Bedienbereichs befindet.

Die hierfür erforderliche Abstandsmessung kann dabei z.B. mit Hilfe einer berührungslosen Datenübertragungsstrecke erfolgen, welche die Automatisierungskomponenten und das mobile Bedien- und Beobachtungsgerät datentechnisch miteinander verbinden.

Zur Lokalisierung oder Abstandsbestimmung kann das mobile Bedien- und Beobachtungsgerät mit Sende- und Empfangsmitteln ausgestattet werden, die ein Abfragesignal aussenden und aus einem daraus resultierenden empfangenen Funkantwortsignale eine Bestimmung des Abstands oder der absoluten Position des mobilen Bedien- und Beobachtungsgeräts ermöglichen.

Abfrage- und Funkantwortsignale sind typischerweise Radarsignale. Das Funkantwortsignal kann z.B. durch eine Reflexion des Abfragesignals an einem reflektierenden Objekt entstehen. Reflektierende Objekte sind auch z.B. Transpondervorrichtung, die ein moduliertes Funkantwortsignal als Antwort auf ein empfangenes Abfragesignal erzeugen und aussenden. Eine derartige Transpondervorrichtung kann z.B. an der technischen Anlage angebracht sein, wodurch eine Abstandsbestimmung zwischen mobilen Bedien- und Beobachtungsgerät und der technischen Anlage mit Hilfe empfangener Funkantwortsignale ermittelt werden kann.

Um Bauteilkosten und einen Vernetzungsaufwand möglichst gering zu halten ist es vorteilhaft, die Lokalisierungsmittel im mobilen Bedien- und Beobachtungsgerät zu integrieren. Auf diese Weise kann auf eine datentechnische Vernetzung zur Abstandsbestimmung zwischen den Automatisierungskomponenten und den Transpondervorrichtungen zur verzichtet werden.

Das mobile Bedien- und Beobachtungsgerät benötigt hierfür sowohl Sende- als auch Empfangsmittel zum Senden von Abfragesignalen und zum Empfangen von Funkantwortsignalen. Aufgrund stringenter Anforderungen hinsichtlich der Bauteilgröße des mobilen Bedien- und Beobachtungsgeräts können z.B. eine Sendeantenne und eine Empfangsantenne des mobilen Bedien- und Beobachtungsgeräts nicht beliebig weit voneinander beabstandet angeordnet werden. Dies ist insbesondere sehr nachteilig, wenn das Abfragesignal und das Funkantwortsignal die gleiche Trägerfrequenz aufweisen. Sind die Sendeantenne und die Empfangsantenne, wie im mobilen Bedien- und Beobachtungsgerät vorgesehen, in einem geringen Abstand angeordnet, kommt es unweigerlich zu einem Übersprechen oder einer Kreuzkopplung zwischen Sende- und Empfangskanal des mobilen Bedien- und Beobachtungsgeräts. Ein Anteil der von der Sendeantenne gesendeten Leistung wird somit direkt in die Empfangsantenne eingekoppelt, wodurch die Sensitivität des Empfängers erheblich beeinträchtigt wird.

Aus DE 103 10 158 A1 ist ein Zugangskontrollsystem für ein Objekt, insbesondere für ein Kraftfahrzeug und ein Verfahren zum Betreiben eines Zugangskontrollsystems bekannt, mit dem eine Berechtigung für den Zugang bzw. für die Nutzung eines Objektes überprüft werden kann.

Aus DE 102 34 467 A1 ist ein Verfahren zur automatisierten Steuerung einer technischen Anlage mit einer Mehrzahl von zur Abwicklung von Prozessschritten datenseitig miteinander verschalteten Anlagenkomponenten, denen von einer zentralen Steuereinrichtung unter Berücksichtigung von dort eingehenden Prozessführungssignalen erzeugte Stellbefehle zugeführt werden, sowie ein zur Durchführung des Verfahrens geeignetes Prozessleitsystem für eine technische Anlage bekannt, wobei in einer mobilen Bedieneinheit erzeugte Prozessführungssignale drahtlos an Schnittstellen übertragen und von diesen an die Steuereinrichtung weitergeleitet werden.

Aus GB 2 372 902 ist eine "Auslöschungs-"Antenne bekannt, mit einer Antenne und einem Koppler, welche als einzelne, integrierte Einheit gestaltet und hergestellt sind wobei die elektrischen Separierung des Kopplers von der Antenne so bestimmt ist, dass "Auslöschung" auftritt.

In Stelzer et al.: "Readout Unit for Wireless SAW Sensors and ID-Tags", Second International Symposium on Acoustic Wave Devices for Future Mobile Communication Systems, 3. März 2004, XP001206909 Keyaki Hall, Chiba University, Japan, wird ein Überblick über moderne Konzepte für kabellose Ausleseeinheiten für akustische Oberflächenwellen (SAW) gegeben. Ferner werden die Grundlagen von SAW-Sensoren, insbesondere von Temperatursensoren auf Grundlage von Verzögerungsleitungen und ID-Tags diskutiert.

Aus US 4,737,793 ist ein zweifach orthogonal polarisierter Antennenaufbau für Radiofrequenzen bekannt, welcher bevorzugt in Form eines Mikrostreifenleiters implementiert ist.

In Reynolds L. et al.:"Single chip FMCW radar for target velocity and range sensing applications", Gallium Arsenide Integrated Circuit (GaAs IC) Symposium, 1989, Technical Digest 1989, 25. Januar 1989, San Diego, CA, USA, Seiten 243-246, XP010085954, wird ein neuartiger frequenzmodulierter Radar MMIC Chip im Dauerstrichbetrieb (FMCW) mit niedriger Leistung demonstriert, welcher erstmals einen elektronischen Zirkulator beinhaltet, um den Betrieb als Einzelantenne in kostengünstigen Anwendungen zu ermöglichen.

Aus DE 691 06 732 T2 ist ein Höchstfrequenz-System zur Fernübertragung von Daten des Typs mit wenigstens einem Leser, der mit einer Vielzahl von Empfängern verbunden ist bekannt, wobei der Leser Mittel zur Erzeugung einer Hochfrequenzwelle mit einer bestimmten geradlinigen Polarisation aufweist, während jeder Empfänger mit einer rechteckigen ebenen Wiederausstrahlungsantenne zum Empfang der Hochfrequenzwelle und zu deren Wiederausstrahlung gemäß einer orthogonalen Polarisation mit einer Phasenmodulation mit zwei Zuständen versehen ist, welche die an den Leser zu übermittelnden Informationen darstellen.

Aus US 6,167,464 ist eine mobile Mensch-Maschine-Schnittstelle (Human Machine Interface HMI) zur Überwachung des Betriebs von räumlich getrennten Steuerungssystemen in einer Fabrik oder ähnlichem bekannt, welches ein Standortsignal einem zentralen Prozessor bereitstellt, der wiederum das Steuerungsprogramm und relevanten Eingabe/Ausgabe-Daten beinhaltet.

Der Erfindung liegt somit die Aufgabe zu Grunde, ein verbessertes Sende- und Empfängerkonzept zur Lokalisierung eines mobilen Bedien- und Beobachtungsgeräts eines HMI Systems zu realisieren.

Die Aufgabe wird mit dem in Anspruch 1 angegebenen HMI System und dem in Anspruch 5 angegebenen mobilen Bedien- und Beobachtungsgerät gelöst. Weitere vorteilhafte Ausführungen der Erfindung sind in den Unteransprüchen angegeben.

Das erfindungsgemäße HMI System verfügt über zumindest ein mobiles Bedien- und Beobachtungsgerät für die Automatisierungskomponenten einer technischen Anlage, die zumindest eine Transpondervorrichtung aufweist. Das HMI System verfügt über Sende- und Empfangsmittel zum Austausch von Funksignalen zwischen der zumindest einen Transpondervorrichtung und dem zumindest einen mobilen Bedien- und Beobachtungsgerät. Des Weiteren verfügt das mobile Bedien- und Beobachtungsgerät über Mittel zur Lokalisierung des mobilen Bedien- und Beobachtungsgeräts. Diese Lokalisierungsmittel sind dazu ausgebildet, vom mobilen Bedien- und Beobachtungsgerät als Radarsignale gesendete und von der zumindest einen Transpondervorrichtung modulierte und reflektierte Funksignale zur Positions- oder Abstandsbestimmung des mobilen Bedien- und Beobachtungsgeräts auszuwerten.

Ferner sind die Sende- und Empfangsmittel zum gleichzeitigen Senden und Empfangen von Funksignalen ausgebildet. Demnach können Funksignale kontinuierlich gesendet und empfangen werden, so dass z.B. der Einsatz eines frequenzmodulierten Dauerstrich-Radarsystems zur Lokalisierung des mobilen Bedien- und Beobachtungsgeräts ermöglicht wird. Das gleichzeitige Senden und Empfangen von Funksignalen bedeutet weiterhin, dass die Sende- und Empfangskanäle hinreichend voneinander entkoppelt sind. Das Übersprechen der Sende- und Empfangskanäle, bzw. deren Kreuzkopplung ist auf ein Minimum reduziert, so dass nur noch ein unerheblicher Anteil der Sendeleistung in den Empfangskanal eingekoppelt wird. Durch eine derartige Isolation zwischen den Sende- und Empfangsmitteln kann die Empfindlichkeit der Empfangsmittel zum Empfang von Funksignalen deutlich gesteigert werden.

Erfindungsgemäß sind die Sende- und Empfangsmittel in einem einzigen Antennenmodul integriert. Dieses Antennenmodul ist demnach sowohl zum Senden als auch zum Empfangen von Funksignalen ausgebildet. Das Antennenmodul ist zum einen an einen Empfangskanal und zum anderen an einen Sendekanal gekoppelt. Sende- und Empfangskanal können hierbei entweder getrennt an das Antennenmodul angekoppelt werden oder aber anhand einer einzigen Leitung an das Antennenmodul angekoppelt werden, wobei diese Leitung zur bidirektionalen Übermittlung von Sende- und Empfangssignalen ausgebildet ist.

Bei einer weiteren Ausführungsform der Erfindung verfügen die Transpondervorrichtung und das mobile Bedien- und Beobachtungsgerät über ein Antennenmodul, welches Sende- und Empfangsmittel in einer baulichen Einheit integriert. Alternativ kann das Antennenmodul jedoch auch lediglich bei der Transpondervorrichtung oder beim mobilen Bedien- und Beobachtungsgerät implementiert sein. Vorzugsweise wird das Antennenmodul aufgrund seiner geringen Bauteilgröße im mobilen Bedien- und Beobachtungsgerät integriert. Abhängig von individuellen Implementierungs- und Kostenanforderungen kann das Antenennmodul als Ersatz zweier Sende- und Empfangsantennen sowohl in der Transpondervorrichtung als auch im mobilen Bedien- und Beobachtungsgerät integriert werden.

Erfindungsgemäß ist das Antennenmodul als eine zweifach polarisierende Dual Port Antenne ausgebildet. Das mobile Bedien- und Beobachtungsgerät ist ferner zum Senden von Funksignalen einer ersten Polarisation und zum Empfangen von Funksignalen einer zweiten Polarisation ausgebildet. Erste und zweite Polarisation sind vorzugsweise orthogonal zueinander. Die Polarisationen können z.B. lineare Polarisationen, zirkulare Polarisationen oder elliptische Polarisationen sein. Aufgrund der unterschiedlichen Polarisationen ist eine hinreichende Isolation zwischen Sende- und Empfangsmitteln gewährleistet. Das Antennenmodul kann z.B. zum Senden von rechts drehenden zirkular-polarisierten Funksignalen und zum Empfangen von links drehenden zirkular-polarisierten Funksignalen ausgebildet sein. Ein Übersprechen oder eine Kreuzkopplung zwischen den Sende- und Empfangskanälen kann somit effektiv verhindert werden.

Bei einer weiteren bevorzugten Ausführungsform der Erfindung ist die Transpondervorrichtung zum Senden eines Funkantwortsignals der zweiten Polarisation in Reaktion auf ein Abfragesignal der ersten Polarisation ausgebildet. Die Transpondervorrichtung empfängt das Abfragesignal, welches z.B. von dem mobilen Bedien- und Beobachtungsgerät gesendet wird und erzeugt hieraus ein Empfangssignal. Dieses Empfangssignal wird typischerweise von der Transpondervorrichtung moduliert und gegebenenfalls verstärkt. Zudem wird das modulierte und verstärkte Empfangssignal von der Transpondervorrichtung in ein Funkantwortsignal der zweiten Polarisation umgewandelt und mit Hilfe von Sendemitteln gesendet. Die Sende- und Empfangsmittel der Transpondervorrichtung sowie die Sende- und Empfangsmittel des mobilen Bedien- und Beobachtungsgeräts sind vorzugsweise als zweifach polarisierende Dual Port Antenne ausgebildet. Alternativ können jedoch auch zwei getrennte Antennenmodule zum Senden und Empfangen der zueinander orthogonal polarisierten Abfrage- und Funkantwortsignale implementiert werden

Vorzugsweise sind die Funksignale, die zwischen dem mobilen Bedien- und Beobachtungsgerät und der Transpondervorrichtung ausgetauscht werden zirkular polarisiert, so dass eine Orientierung des Antennenmoduls des mobilen Bedien- und Beobachtungsgeräts bezüglich des Antennenmoduls der Transpondervorrichtung zur Funksignalübermittlung unerheblich ist. Kommen jedoch linear polarisierte Funksignale zum Einsatz, so ist darauf zu achten, dass das mobile Bedien- und Beobachtungsgerät und die Transpondervorrichtung entsprechend zueinander ausgerichtet sind.

Ist z.B. die Transpondervorrichtung zum Empfangen von vertikal linear polarisierten Funksignalen ausgebildet, so muss das mobile Bedien- und Beobachtungsgerät zum Senden solcher vertikal linear polarisierten Funksignalen und zum Empfangen von horizontal polarisierten Funksignalen ausgebildet sein. Die Bewegungsfreiheit, bzw. die Möglichkeit einer beliebigen Orientierung oder Ausrichtung des mobilen Bedien- und Beobachtungsgeräts ist somit bei der Verwendung linear polarisierter Signale eingeschränkt. Bei der Verwendung von zirkular oder elliptisch polarisierten Funksignalen ist hingegen die relative Ausrichtung der Antennenmodule der Transpondervorrichtung und des mobilen Bedien- und Beobachtungsgeräts nahezu unerheblich für die Austausch von Funksignalen.

Bei einer alternativen beispielhaften Ausführungsform ist das Antennenmodul als eine Duplex-Antenne mit einem Kopplungsmodul ausgebildet. Das Kopplungsmodul verfügt über einen Eingangsport zum Einkoppeln von Signalen in die Antenne und einen Ausgangsport zum Auskoppeln von Signalen von der Antenne. Das Kopplungsmodul und das Antennenmodul sind hierbei über eine einzige Leitung verbunden, die ein bidirektionales Übermitteln von Sende- und Empfangssignalen ermöglicht. Das Kopplungsmodul kann als integraler Bestandteil eines Speisenetzwerks für das Antennenmodul ausgebildet sein.

Die Verwendung einer Duplex-Antenne mit einem Kopplungsmodul ermöglicht eine Trennung und somit eine hinreichende Isolation zwischen Sende- und Empfangskanal unter Einsatz von Sende- und Empfangssignalen gleicher Polarisationsrichtung. Die Verwendung einer solchen Duplex-Antenne mit Kopplungsmodul ermöglicht somit eine hinreichende Isolation von Sende- und Empfangskanal, wo ein Einsatz unterschiedlich polarisierter Funksignale nicht möglich oder nicht wünschenswert ist. Dies ist vor allem bei der Verwendung von passiven Transpondervorrichtungen oder Reflektormodulen vorteilhaft, die ein Funkantwortsignal unter Beibehaltung der Polarisation des Abfragesignals senden.

Beispielsweise ist das Kopplungsmodul als Zirkulator, Leistungsteiler oder Richtkoppler ausgebildet. Leistungsteiler sind z.B. 3-dB-Koppler, 90°-Hybrid oder 180°-Hybrid Koppler. Das Kopplungsmodul kann zudem als Verzweigungszirkulator ausgebildet sein. Mit Hilfe eines oder mehrerer Leistungsteiler, Zirkulatoren oder Richtkopplern und entsprechenden Filtern können somit mehrere Sender und Empfänger an einer einzigen Antenne zusammengeschaltet werden.

Bei einer weiteren bevorzugten Ausführungsform der Erfindung verfügt das HMI System über Mittel zur berührungslosen Datenübertragung zwischen dem mobilen Bedien- und Beobachtungsgerät und den Automatisierungskomponenten der technischen Anlage sowie über Auswertemittel zur Verwaltung eines aktiven Bedienbereichs. Diese Auswertemittel aktivieren die Automatisierungskomponenten der technischen Anlage für sicherheitsrelevante Bedienungen über das mobile Bedien- und Beobachtungsgerät, wenn die Lokalisierungsmittel detektieren, dass sich das mobile Bedien- und Beobachtungsgerät innerhalb des aktiven Bedienbereichs befindet. Mit Hilfe der Lokalisierungs- und Auswertemittel können somit sicherheitsrelevante Vorgänge der technischen Anlage abhängig von der Position des mobilen Bedien- und Beobachtungsgeräts freigegeben oder deaktiviert werden.

In einem weiteren Aspekt betrifft die Erfindung ein mobiles Bedien- und Beobachtungsgerät eines HMI Systems für die Automatisierungskomponenten einer technischen Anlage mit zumindest einer Transpondervorrichtung. Das mobile Bedien- und Beobachtungsgerät verfügt über Sende- und Empfangsmittel zum Austausch von Funksignalen zwischen der zumindest einen Transpondervorrichtung, die an der technischen Anlage angebracht ist, und dem mobilen Bedien- und Beobachtungsgerät. Das mobile Bedien- und Beobachtungsgerät verfügt ferner über Mittel zur Lokalisierung des mobilen Bedien- und Beobachtungsgeräts mit Hilfe von Funksignalen, die vom mobile Bedien- und Beobachtungsgerät als Radarsignale gesendet und von der zumindest einen Transpondervorrichtung moduliert und reflektiert werden. Die Sende- und Empfangsmittel des mobilen Bedien- und Beobachtungsgeräts sind zum gleichzeitigen Senden und Empfangen von Funksignalen ausgebildet und sind ferner in einem einzigen Antennenmodul integriert. Das Antennenmodul ist hierbei als eine zweifach polarisierende Dual Port Antenne ausgebildet.

Bevorzugte Ausführungsformen der Erfindung und beispielhafte Alternativen werden nachfolgend anhand der Zeichnungen näher erläutert. Es zeigen:
- Figur 1: ein schematisches Blockdiagramm des erfindungsgemäßen HMI Systems,
- Figur 2: ein Blockdiagramm eines Lokalisierungsmoduls des mobilen Bedien- und Beobachtungsgeräts,
- Figur 3: ein Blockdiagramm einer Transpondervorrichtung,
- Figur 4: ein Blockdiagramm eines Lokalisierungsmoduls des mobilen Bedien- und Beobachtungsgeräts mit einem Kopplungsmodul
- Figur 5: ein Blockdiagramm einer zirkular polarisierenden Dual Port Antenne,
- Figur 6: eine Blockdiagram einer linear polarisierenden Dual Port Antenne.

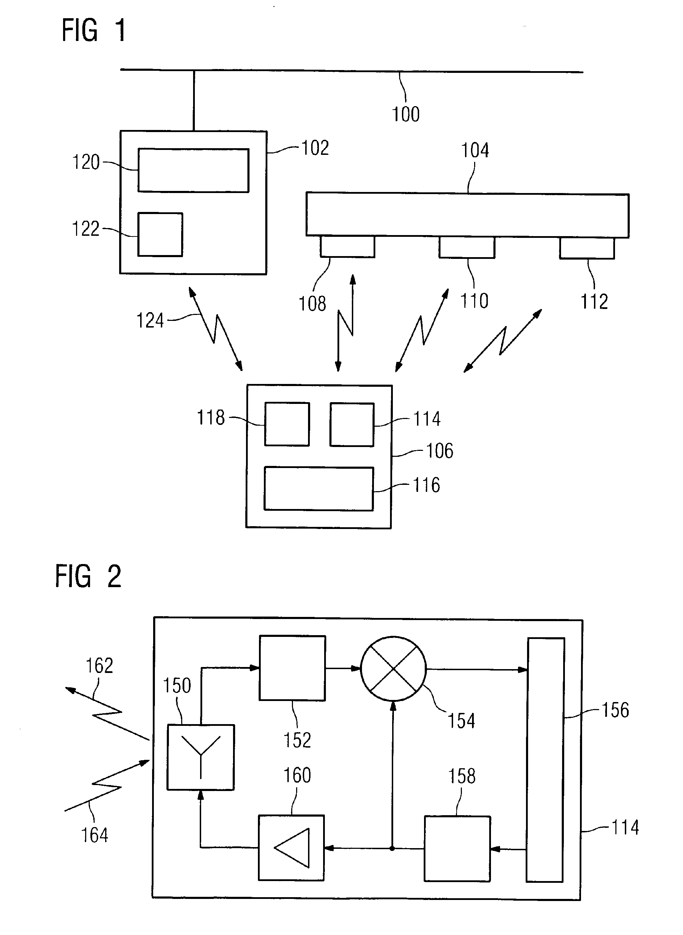

Figur 1 zeigt beispielhaft eine technische Anlage 104 mit technischen Betriebsmitteln, die z.B. Bestandteil einer fertigungs- oder prozesstechnischen Vorrichtung sein können. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens ein Reflektormodul, vorzugsweise über eine Reihe von Transpondern 108, 110, 112, die an verschiedenen Referenzpunkten an der technischen Anlage 104 angebracht sind. Die Transponder sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung bezüglich der Position mindestens eines der Transponder 108, 110, 112 selbsttätig durchzuführen. Die Transponder 108, 110, 112 müssen hierbei keine Signalauswertung vornehmen.

Ebenso ist eine Datenübertragung zwischen den Automatisierungskomponenten 102 und den einzelnen Transpondern 108, 110, 112 zur Lokalisierung des mobilen Bedien- und Beobachtungsgeräts 106 nicht nötig. Daher können die einzelnen Transponder 108, 110, 112 sehr robust und kostengünstig in großer Stückzahl hergestellt werden.

Das Lokalisierungsmodul 114 ist vorzugsweise als FMCW-Radar ausgebildet und die einzelnen Transpondern 108, 110, 112 sind zur Modulation empfangener Radarsignale und zum Reflektieren daraus resultierender modulierter Radarsignale ausgebildet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. Durch eine entsprechende Subträger-Filterung im Lokalisierungsmodul 114 kann somit, mit Hilfe eines FMCW-Radars, eine eindeutige Entfernungsmessung für stationäre Ziele sogar mit einem Empfänger im Lokalisierungsmodul 114 realisiert werden, der den lediglich den Realteil des Empfangssignal verarbeitet. Insbesondere die Implementierung eines solchen Empfängers im Lokalisierungsmodul 114 ermöglicht eine kostengünstige und Platz sparende Realisierung eines Empfängerkonzepts für das erfindungsgemäße HMI System zur Lokalisierung des mobilen Bedien- und Beobachtungsgeräts.

Figur 2 zeigt ein Blockdiagramm des Lokalisierungsmoduls 114 des mobilen Bedien- und Beobachtungsgeräts 106. Das Lokalisierungsmodul 114 verfügt über eine integrierte Sende- und Empfangsantenne 150, einen Verstärker 152, einen Mischer 154, ein Kontrollmodul 156, einen spannungskontrollierten Oszillator 158 sowie einen Verstärker 160. Das Kontrollmodul 156 wird zur Auswertung der Abstandsmessung, zur Datenkommunikation und zur Kalibrierung verwendet. Das Kontrollmodul 156 ist z.B. als Mikro-Controller ausgebildet.
und ist vorzugsweise weiterhin mit der Auswerteeinheit, dem Ein- und Ausgabemodul 116 und dem Datenübertragungsmodul 118 des mobilen Bedien- und Beobachtungsgeräts 106 verbunden.

Das Kontrollmodul 156 steuert zum einen den spannungskontrollierten Oszillator 158 und ist ferner zur Auswertung von empfangenen Signalen, die vom Mischer 154 geliefert werden, ausgebildet. Das Kontrollmodul 156 ermöglicht z.B. eine Frequenzanalyse empfangener Signale mittels einer FFT Prozedur.

Der spannungskontrollierte Oszillator 158, auch als Voltage Controlled Oscillator (VCO) bezeichnet, wird vom Kontrollmodul 156 angesteuert und erzeugt das Sende- und Lokaloszillator-Signal. Abhängig von seiner Eingangsspannung erzeugt der spannungskontrollierte Oszillator 158 ein Ausgangssignal variierender Frequenz. Typischerweise liegt das vom spannungskontrollierten Oszillator 158 erzeugte Signal im GHz-Bereich. Z.B. erzeugt der spannungskontrollierte Oszillator 158 Ausgangssignale innerhalb des ISM-Bandes bei einer Mittenfrequenz um 2,4 GHz.

Das vom spannungskontrollierten Oszillator 162 erzeugte RF-Signal weist typischerweise einen Frequenzhub im Bereich einiger 10 MHz auf bei einer Rampenzeit im ms-Bereich.

Das erzeugte Frequenz modulierte RF-Signal wird vorzugsweise mit Hilfe des Verstärkers 160 auf einen notwendigen Pegel verstärkt und schließlich an die Sende- und Empfangsantenne 150 übermittelt. Von dort wird das RF-Signal über die Funkstrecke 162 ausgesendet. Das Sende- und Empfangsmodul 150 ist typischerweise als Dual Port Antenne ausgebildet und erlaubt eine zeitgleiche Verwendung zum Senden und Empfangen von RF-Signalen. Vorzugsweise strahlt die Antenne in einen Halbraum und ermöglicht somit eine effiziente Nutzung der verfügbaren Leistung.

Vorzugsweise ist die Antenne 150 als zweifach polarisierende Antenne ausgebildet, so dass Sie zum einen zum Senden von Funksignalen einer ersten Polarisation über die Funkstrecke 162 und zum Empfangen von Funksignalen einer zweiten Polarisation über die Funkstrecke 164 ausgebildet ist. Vorzugsweise sind die Sendesignale und die Empfangssignale entgegengesetzt zirkular polarisiert, so dass eine effektive und nahezu verlustfreie Trennung der Sende- und Empfangskanäle des Lokalisierungsmoduls 114 realisiert werden kann.

Signale, die von der Antenne 150 empfangen werden, werden vorzugsweise mit Hilfe des Verstärkers 152 verstärkt. Dieser Verstärker 152 kann z.B. als einstufiger Transistorverstärker ausgebildet sein. Die verstärkten empfangenen Radarsignale werden dann mit Hilfe des Mischers 154 auf die Subträger-Frequenz umgesetzt. Diese Subträger-Frequenz entspricht der Modulationsfrequenz der Transpondern 108, 110, 112, die vorzugsweise im kHz bis MHz Bereich liegt. Der Mischer liefert ein reelles Ausgangsignal, so dass eine reelle Signalauswertung ermöglicht wird. Demnach kann auf den Einsatz kosten- und platzaufwändiger Komponenten zur komplexen Signalauswertung, wie z.B. I/Q Demodulatoren, verzichtet werden.

Das vom Mischer 154 erzeugte Zwischenfrequenz-Signal enthält die Abstandsinformation zu einem Transponder 108, 110, 112 und der Ausgang des Mischers ist an das Kontrollmodul 156 gekoppelt, welches eine Frequenzanalyse zur Abstandsbestimmung durchführt.

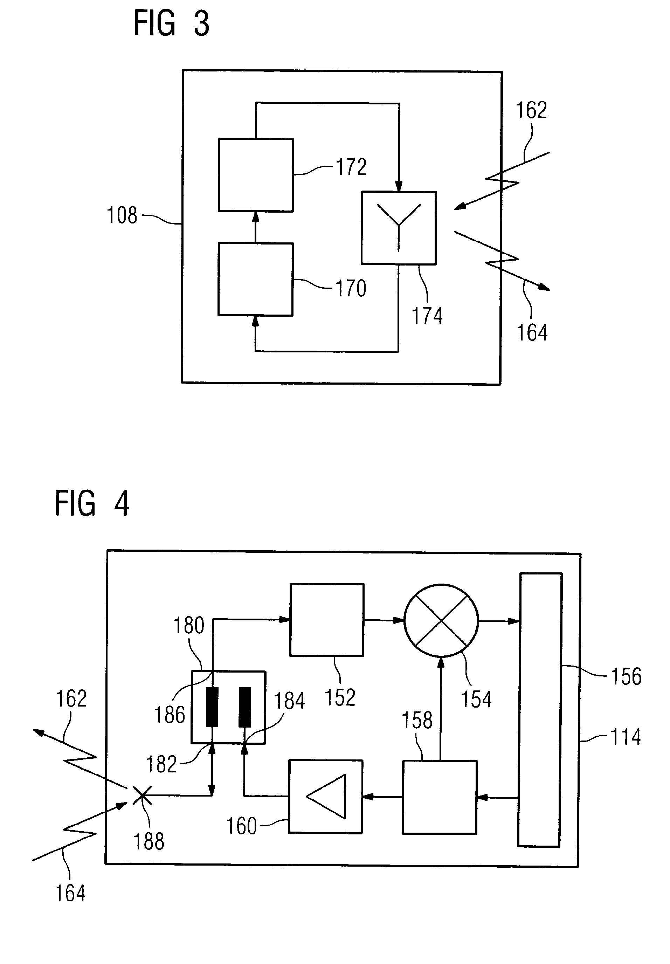

Figur 3 zeigt ein Blockdiagramm eines Transponders 108, der über eine Antenne 174, einen Verstärker 170 sowie über einen Modulator 172 verfügt. Der Transponder 108 stellt das komplementäre Element zum Lokalisierungsmodul 114 dar. Der Transponder 108 ist zum Empfangen von Funksignalen 162 und zum Senden von Funksignalen 164 ausgebildet, die in komplementärer Weise vom Lokalisierungsmodul 114 ausgesendet, bzw. empfangen werden. Ebenso wie im Blockdiagramm von Figur 2 ist die Sende- und Empfangsantenne 174 als zweifach polarisierende Dual Port Antenne ausgebildet. Die Antenne 174 hat einen Empfangs- bzw. RX Port, der mit dem Verstärker 170 verbunden ist. Zudem hat die Antenne 174 eine Sende- bzw. TX Port, der mit dem Modulator 172 verbunden ist.

Mittels der Dual Port Antenne 174 werden Abfragesignale, die über die Funkstrecke 162 empfangen werden, an den Verstärker 170 als Empfangssignale übermittelt. Der Verstärker 170 ist zum Verstärken dieser empfangenen Abfragesignale ausgebildet und die verstärkten Empfangssignale werden mit Hilfe des Modulators 172 mit einer Subträgerfrequenz, vorzugsweise in KHz bis MHz-Bereich moduliert. Die so modulierten und verstärkten Empfangssignale werden dann der Sende- und Empfangsantenne 174 zum Senden eines entsprechenden Funkantwortsignals über die Funkstrecke 164 weitergeleitet.

Der in Figur 3 dargestellte Transponder 108 dient als komplementäres Element zur zweifach polarisierende Dual Port Antenne 150 des Lokalisierungsmoduls 114. Die Antenne 174 ist so ausgelegt, dass die über die Funkstrecke 164 emittierten Funksignale orthogonal zu den über die Funkstrecke 162 empfangenen Funksignalen sind. Der Transponder 108 ist zudem als aktiver Transponder mit einem Verstärker 170 ausgebildet. Alternativ kann der Transponder 108 auch ohne verstärkendes Element 170 realisiert werden.

Figur 4 zeigt ein Blockdiagramm eines Lokalisierungsmoduls 114, bei dem im Gegensatz zum Blockdiagramm von Figur 2 an Stelle einer Dual Port Antenne 150 eine Duplex-Antenne 188 mit einem Kopplungselement 180 implementiert ist. Das Kopplungselement 180 verfügt über drei Anschlüsse 182, 184, 186. Der Anschluss 182 ist der Antennenanschluss, der an die Sende- und Empfangsantenne 188 gekoppelt werden kann. Anschluss 184 stellt einen Sendekanal dar und Anschluss 186 einen Empfangskanal. Der Empfangskanal 186 ist demnach an den Verstärker 152 gekoppelt und der Sendekanal 184 ist an den Leistungsverstärker 160 gekoppelt. Die über den Sendekanal 184 aufgenommene Leistung wird durch das Kopplungselement 180 unter einem möglichst geringen Verlust über den Sende- und Empfangsanschluss 182 an die Antenne 188 gekoppelt. Funkantwortsignale, die über die Funkstrecke 164 und die Antenne 188 dem Empfangskanal 182 des Kopplungselements 180 zugeführt werden, werden vorzugsweise unter geringsten Verlusten an den Empfangskanal 186 und schließlich an den Verstärker 152 übermittelt.

Das Kopplungselement 180 gewährleistet eine hinreichende Isolation zwischen den Sende- und Empfangskanälen des Lokalisierungsmoduls 114. Das Kopplungselement kann durch einen Leistungsteiler, wie z.B. einen 3-dB-Koppler oder einen Hybrid-Koppler realisiert werden. Alternativ kann auch ein Zirkulator oder eine Richtungsgabel die Funktion des Kopplungselement 180 übernehmen. In der gezeigten Ausführungsform ist die Antenne 188 über eine einzige Leitung mit dem Sende- und Empfangsanschluss des Kopplungselements 180 verbunden.

Mit Hilfe des Kopplungselements 180 können Sende- und Empfangssignale hinreichend voneinander getrennt werden, so dass die Antenne 188 keine besonderen Sende- oder Empfangseigenschaften aufweisen muss und daher kostengünstig implementiert werden kann. Im Unterschied zur zweifach polarisierenden Dual Port Antenne 174 kann die Antenne 188 als eine einfach polarisierende Sende- und Empfangsantenne ausgebildet werden.

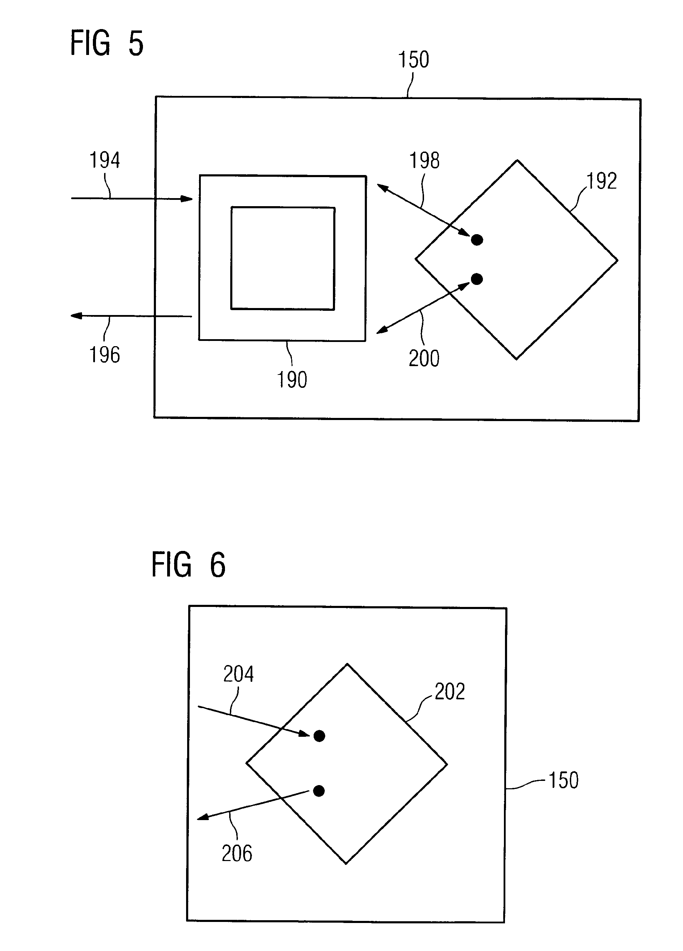

Figur 5 zeigt ein Ausführungsbeispiel einer Dual Port Antenne 150, die zum Senden und Empfangen von zirkular polarisierenden Funksignalen ausgebildet ist. Diese Dual Port Antenne 150 hat einen 90°-Hybrid Koppler 190 und ein Antennenelement 192. Ferner hat die Dual Port Antenne 150 einen Sendekanal oder TX Port 194 sowie einen Empfangskanal oder RX Port 196. Der TX Port 194 ist an den Verstärker 160 und RX Port ist an den Verstärker 152 aus Figur 2 angeschlossen.

Der 90°-Hybrid-Koppler 190 ist mittels zweier Leitungen 198 und 200 mit dem Antennenelement 192 verbunden. vom TX Port 194 eingehende elektrische Signale werden mit Hilfe des 90°-Hybrid Kopplers 190 in zwei um 90° Phase verschobene Signale umgesetzt, die mittels Leitungen 198 und 200 in das Antennenelement 192 eingekoppelt werden. Infolge dieser Ansteuerung erzeugt das Antennenelement 192 zirkular polarisierte Funksignale, die über die Funkstrecke 162 gesendet werden. Diese Sendesignale sind z.B. rechtsdrehend polarisiert.

Ebenso kann die Anordnung des Kopplers 190 und des Antennenelements 192 zum Empfangen von entgegengesetzt zirkular polarisierten, das heißt links drehend zirkular polarisierten, Funksignalen verwendet werden. Die empfangenen links polarisierten Funksignale werden mit Hilfe der Leitungen 198 und 200 in den Hybrid-Koppler 190 eingespeist. Beträgt die Phasenverschiebung der über die Leitungen 198 und 200 in den Hybrid-Koppler 190 eingespeisten Signale entsprechend einer links drehenden zirkularen Polarisation z.B. -90°, so werden die Empfangssignale nahezu ohne Verluste an den RX Port 196 gekoppelt. Der 90°-Hybrid- oder Branch-Line-Koppler 190 ermöglicht so die Erzeugung zirkular polarisierter Funksignale sowie eine effektive Isolation zwischen Sende- und Empfangsport einer Dual Port Antenne 150.

Figur 6 zeigt ein weiteres Ausführungsbeispiel einer zweifach polarisierenden Dual Port Antenne 202. Diese Dual Port Antenne 202 ist für linear und zueinander senkrecht polarisierte Sende- und Empfangssignale ausgebildet. Zuleitung 204 entspricht dem Sendekanal oder TX Port des Antennenmoduls und Zuleitung 206 entspricht dem Empfangskanal oder RX Port. Eine Isolation zwischen Sende- und Empfangsport 204, 206 wird durch die Geometrie des Antennenelements 202 realisiert. So werden z.B. elektrische Signale, die über die Zuleitung 204 zugeführt werden, in senkrecht polarisierte Funksignale umgesetzt, die als Abfragesignale zur Transpondervorrichtung gesendet werden. Entsprechend ist das Antennenelement 202 zum Empfang von waagerecht polarisierten Funkantwortsignale, die von der Transpondervorrichtung zurückgesendet werden. Diese waagerechten Funkantwortsignale werden von dem Antennenelement 202 in elektrische Signale umgewandelt, die an der Zuleitung 206 abgegriffen werden können. Somit kann eine ausreichende Isolation zwischen Sende- und Empfangsport mit vernachlässigbarem Leistungsverlust in einem einzigen Bauteil realisiert werden.

## Patentansprüche

1. HMI System mit zumindest einem mobilen Bedien- und Beobachtungsgerät (106) zur Steuerung von Automatisierungskomponenten (102) einer technischen Anlage (104) in Echtzeit, mit zumindest einer Transpondervorrichtung (108, 110, 112)an verschiedenen Referenzpunkten der technischen Anlage, mit
- Sende- und Empfangsmitteln (150) in einem Lokalisierungsmodul (114) eines mobilen Bedien- und Beobachtungsgeräts (106) zum Senden von Funksignalen und Empfangen von von der zumindest einen Transpondervorrichtung (108, 110, 112) modulierten und reflektierten Funksignalen,
- Mitteln zur selbsttätigen Lokalisierung des mobilen Bedien- und Beobachtungsgeräts (106) bezüglich der Position der zumindest einen Transpondervorrichtung (108, 110, 112) mittels der als Radarsignale vom mobilen Bedien- und Beobachtungsgerät (106) gesendeten und empfangenen modulierten und reflektierten Funksignale,
wobei die Sende- und Empfangsmittel (150) in dem Lokalisierungsmodul (114) der mobilen Bedien- und Beobachtungsgeräte (106) zum gleichzeitigen Senden und Empfangen von Funksignalen ausgebildet sind, wobei die Sende- und Empfangsmittel (150) im Lokalisierungsmodul (114) des Bedien- und Beobachtungsgeräts (116) in einem einzigen Antennenmodul integriert sind, wobei das als Sende- und Empfangsmittel fungierende Antennenmodul (150) als eine zweifach polarisierende Dual Port Antenne (174) ausgebildet ist und das mobile Bedien- und Beobachtungsgerät (106) zum Senden von Funksignalen einer ersten Polarisation und zum Empfangen von Funksignalen einer zweiten Polarisation ausgebildet ist, und wobei eine Datenübertragung zwischen den Automatisierungskomponenten (102) und den einzelnen Transpondervorrichtungen (108, 110, 112) zur Lokalisierung des jeweiligen mobilen Bedien- und Beobachtungsgeräts (106) nicht erforderlich ist.

2. HMI System nach Anspruch 1, wobei die Transpondervorrichtung (108, 110, 112) und das mobile Bedien- und Beobachtungsgerät (106) über das Antennenmodul als Sende- und Empfangsmittel (150) verfügen.

3. HMI System nach einem der Ansprüche 1 oder 2, wobei die Transpondervorrichtung (108, 110, 112) zum Senden eines Funkantwortsignals der zweiten Polarisation in Reaktion auf ein Abfragesignal der ersten Polarisation ausgebildet ist.

4. HMI System nach einem der Ansprüche 1 bis 3, mit
- Mitteln zur berührungslosen Datenübertragung zwischen dem mobilen Bedien- und Beobachtungsgerät (106) und den Automatisierungskomponenten (102) mittels Datenübertragungsmodule (118, 122), ohne dass eine Datenübertragung zwischen den Automatisierungskomponenten (102) und den einzelnen Transpondervorrichtungen (108, 110, 112) erforderlich ist,
- Auswertemitteln zur Verwaltung eines aktiven Bedienbereichs, welche die Automatisierungskomponenten (102) für sicherheitsrelevante Bedienungen der technischen Anlage (104) über das mobile Bedien- und Beobachtungsgerät (106) nur dann aktivieren, wenn die Sende- und Empfangsmitteln (150) im Lokalisierungsmodul (114) des mobilen Bedien- und Beobachtungsgeräts (106) detektieren, dass sich das mobile Bedien- und Beobachtungsgerät (106) innerhalb des aktiven Bedienbereichs befindet.

5. Mobiles Bedien- und Beobachtungsgerät (106) eines HMI Systems zur Steuerung der Automatisierungskomponenten (102) einer technischen Anlage (104) mit zumindest einer Transpondervorrichtung (108, 110, 112), das mobile Bedien- und Beobachtungsgerät (106) mit
- Sende- und Empfangsmitteln (150) zum Senden von Funksignalen und Empfangen von von der zumindest einen Transpondervorrichtung (108, 110, 112) modulierten und reflektierten Funksignalen,
- Mitteln zur selbsttätigen Lokalisierung des mobilen Bedien- und Beobachtungsgeräts (106) bezüglich der Position der zumindest einen Transpondervorrichtung (108, 110, 112) mittels der als Radarsignale vom mobilen Bedien- und Beobachtungsgerät (106) gesendeten und empfangenen modulierten und reflektierten Funksignale,
wobei die Sende- und Empfangsmittel (150) zum gleichzeitigen Senden und Empfangen von Funksignalen ausgebildet sind und in einem einzigen Antennenmodul integriert sind, und wobei das als Sende- und Empfangsmittel fungierende Antennenmodul (150) als eine zweifach polarisierende Dual Port Antenne (174) ausgebildet ist und das mobile Bedien- und Beobachtungsgerät (106) zum Senden von Funksignalen einer ersten Polarisation und zum Empfangen von Funksignalen einer zweiten Polarisation ausgebildet ist.

## Claims

1. HMI system with at least one mobile control and monitoring device (106) for controlling automation components (102) of a technical plant (104) in real time, with at least one transponder device (108, 110, 112) at different reference points of the technical plant, with
- transmit and receive means (150) in a localisation module (114) of a mobile control and monitoring device (106) for transmitting radio signals and receiving radio signals modulated and reflected by the at least one transponder device (108, 110, 112),
- means for automatic localisation of the mobile control and monitoring device (106) in relation to the position of the at least one transponder device (108, 110, 112) by means of the radio signals modulated and reflected as radar signals sent and received from the mobile control and monitoring device (106),
wherein the transmit and receive means (150) in the localisation module (114) of the mobile control and monitoring device (106) is embodied for simultaneous transmission and receipt of radio signals, wherein the transmit and receive means (150) in the localisation module (114) of the control and monitoring device (116) is integrated into a single antenna module, wherein the antenna module (150) functioning as a transmit and receive module is embodied as a dual-polarised dual-port antenna (174) and the mobile control and monitoring device (106) is embodied for sending radio signals of a first polarisation and for receiving radio signals of a second polarisation, and wherein a data transmission between the automation component (102) and the individual transponder devices (108, 110, 112) is not required for localising the respective mobile control and monitoring device (106).

2. HMI system according to claim 1, wherein the transponder device (108, 110, 112) and the mobile control and monitoring device (106) have the antenna module available to them as transmit and receive means (150).

3. HMI System according to one of claims 1 or 2, wherein the transponder device (108, 110, 112) is embodied for transmitting a radio response signal of the second polarisation in reaction to a request signal of the first polarisation.

4. HMI system according to one of claims 1 to 3, with
- means for non-contact data transmission between the mobile control and monitoring device (106) and the automation components (102) by means of data transmission modules (118, 122), without a data transmission being necessary between the automation components (102) and the individual transponder devices (108, 110, 112),
- evaluation means for managing an active operator area, which only activates the automation components (102) for safety-relevant operations of the technical system (104) via the mobile control and monitoring device (106) when the transmit and receive means (150) in the localisation module (114) of the mobile control and monitoring device (106) detect that the mobile control and monitoring device (106) is located within the active operating area.

5. Mobile control and monitoring device (106) of an HMI system for controlling the automation components (102) of a technical system (104) with at least one transponder device (108, 110, 112), the mobile control and monitoring device (106) with
- transmit and receive means (150) for transmitting radio signals and receiving radio signals modulated and reflected by the at least one transponder device (108, 110, 112).
- Means for automatic localisation of the mobile control and monitoring device (106) in relation to the position of the least one transponder device (108, 110, 112) by means of the radio signals sent and received modulated and reflected as radar signals from the mobile control and monitoring device (106),
wherein the transmit and receive means (150) is embodied for simultaneous transmission and receipt of radio signals and is integrated into a single antenna module, and wherein the antenna module (150) functioning as a transmit and receive module is embodied as a dual-polarised dual-port antenna (174) and the mobile control and monitoring device (106) is embodied for sending radio signals of a first polarisation and for receiving radio signals of a second polarisation.

## Revendications

1. Système à interface homme-machine ayant au moins un appareil ( 106 ) mobile de manoeuvre et d'observation pour la commande de composants ( 102 ) d'automatisation d'une installation ( 104 ) technique en temps réel, au moins un dispositif ( 108, 110, 112 ) transpondeur en divers points de référence de l'installation technique,
- des moyens ( 150 ) d'émission et de réception dans un module ( 114 ) de localisation d'un appareil ( 106 ) mobile de manoeuvre et d'observation pour émettre des signaux radioélectriques et recevoir des signaux radioélectriques modulés et réfléchis par le au moins un dispositif ( 108, 110, 112 ) transpondeur,
- des moyens de localisation automatique de l'appareil ( 106 ) de manoeuvre et d'observation par rapport à la position du au moins un dispositif ( 108, 110, 112 ) transpondeur, à l'aide des signaux radioélectriques modulés et réfléchis émis et reçus sous la forme de signaux radar par l'appareil ( 106 ) mobile de manoeuvre et d'observation,
dans lequel les moyens ( 150 ) d'émission et de réception dans le module ( 114 ) de localisation des appareils ( 106 ) mobiles de manoeuvre et d'observation sont constitués pour émettre et recevoir en même temps des signaux radioélectriques, les moyens ( 150 ) d'émission et de réception dans le module ( 114 ) de localisation de l'appareil ( 116 ) de manoeuvre et d'observation étant intégrés dans un module d'antenne unique, le module ( 150 ) d'antenne servant de moyen d'émission et de réception étant constitué sous la forme d'une antenne ( 174 ) dual port deux fois polarisante et l'appareil ( 106 ) mobile de manoeuvre et d'observation étant constitué pour l'émission de signaux radioélectriques d'une première polarisation et pour la réception de signaux radioélectriques d'une deuxième polarisation et dans lequel une transmission de données entre les composants ( 102 ) d'automatisation et les divers dispositifs ( 108, 110, 112 ) transpondeurs n'est pas nécessaire pour la localisation de l'appareil ( 106 ) mobile de manoeuvre et d'observation respective.

2. Système à interface homme-machine suivant la revendication 1, dans lequel le dispositif ( 108, 110, 112 ) transpondeur et l'appareil ( 106 ) mobile de manoeuvre et d'observation disposent du module d'antenne comme moyen ( 150 ) d'émission et de réception.

3. Système à interface homme-machine suivant l'une des revendications 1 ou 2, dans lequel le dispositif ( 108, 110, 112 ) transpondeur est constitué pour l'émission d'un signal de réponse radioélectrique de la deuxième polarisation en réaction à un signal de demande de la première polarisation.

4. Système à interface homme-machine suivant l'une des revendications 1 à 3, comprenant
- des moyens de transmission de données sans contact entre l'appareil ( 106 ) mobile de manoeuvre et d'observation et les composants ( 102 ) d'automatisation au moyen de modules ( 111, 122 ) de transmission de données sans que soit nécessaire une transmission de données entre les composants ( 102 ) d'automatisation et les divers dispositifs ( 108, 110, 112 ) transpondeurs,
- des moyens d'exploitation pour gérer une plage de manoeuvre active, qui activent les composants ( 102 ) d'automatisation pour des manoeuvres sécurisées de l'installation ( 104 ) technique par l'intermédiaire de l'appareil ( 106 ) mobile de manoeuvre et d'observation seulement si les moyens ( 150 ) d'émission et de réception dans le module ( 114 ) de localisation de l'appareil ( 106 ) mobile de manoeuvre et d'observation détectent que l'appareil ( 106 ) mobile de man
- oeuvre et d'observation se trouve dans la plage de commande active.

5. Appareil ( 106 ) mobile de manoeuvre et d'observation d'un système à interface homme-machine pour la commande des composants ( 102 ) d'automatisation d'une installation ( 104 ) technique comprenant au moins un dispositif ( 108, 110, 112 ) transpondeur, l'appareil ( 106 ) mobile de manoeuvre et d'observation ayant
- des moyens ( 150 ) d'émission et de réception pour émettre des signaux radioélectriques et recevoir des signaux radioélectriques modulés et réfléchis par le au moins un dispositif ( 108, 110, 112 ) transpondeur,
- des moyens de localisation automatique de l'appareil ( 106 ) mobile de manoeuvre et d'observation par rapport à la position du au moins un dispositif ( 108, 110, 112 ) transpondeur à l'aide des signaux radioélectriques modulés et réfléchis émis et reçus par l'appareil ( 106 ) mobile de manoeuvre et d'observation,
- les moyens ( 150 ) d'émission et de réception étant constitués pour émettre et recevoir en même temps des signaux radioélectriques et étant intégrés dans un module d'antenne unique et le module ( 150 ) d'antenne servant de moyen d'émission et de réception étant constitué sous la forme d'une antenne ( 174 ) dual port polarisante deux fois et l'appareil ( 106 ) mobile de manoeuvre et d'observation étant constitué pour l'émission de signaux radioélectriques d'une première polarisation et la réception de signaux radioélectriques d'une deuxième polarisation.
